# EUROPÄISCHE PATENTSCHRIFT

(11) **EP 2 378 332 B1**
(45) Veröffentlichungstag und Bekanntmachung des Hinweises auf die Patenterteilung: **24.07.2019**
(21) Anmeldenummer: 11160080.5
(22) Anmeldetag: 28.03.2011
(51) Int. Cl.: G02B 6/38, G02B 6/245, G02B 6/25

(54) **Zangenartiges Werkzeug**
Clipper tool
Outil de type pince

(30) Priorität: 17.04.2010 DE 202010005761 U
(43) Veröffentlichungstag der Anmeldung: 19.10.2011
(73) Patentinhaber: Weidmüller Interface GmbH & Co. KG, 32758 Detmold (DE)
(72) Erfinder: Dierks, Christoph, 32760 Detmold (DE); Hanning, Günther, 32758 Detmold (DE)
(74) Vertreter: Specht, Peter

(56) Entgegenhaltungen:
- EP-A1- 2 264 495
- EP-A2- 1 972 973
- WO-A1-02/41059
- DE-A1- 19 842 122
- JP-A- 9 061 667

## Beschreibung

Die Erfindung betrifft ein Werkzeug nach dem Oberbegriff des Anspruchs 1.

Derartige Werkzeuge sind an sich bekannt, so aus der DE 198 42 122 C2 oder der DE 100 56 780 A1.

Zum technologischen Hintergrund werden ferner die WO 02 / 41059 A1 und die nachveröffentlichte EP 2 264 495 A1 genannt.

Die bekannten Werkzeuge bedürfen hinsichtlich ihrer Handhabung und Funktionssicherheit der weiteren Optimierung.

Die Lösung dieser Probleme ist die Aufgabe der Erfindung.

Die Erfindung löst diese Aufgabe durch den Gegenstand des Anspruchs 1.

Die Handhabungsvorrichtung erleichtert das Einlegen des Steckers bzw. der Stecker in die für sie vorgesehene Aufnahme(n) deutlich, insbesondere, wenn diese Aufnahmen schwer zugänglich sind.

Einige geeignete Ausgestaltungen sind in den Unteransprüchen beschrieben.

Sofern eine elektronische Zähleinrichtung vorgesehen ist, welche entweder direkt einen Schnittvorgang sensiert oder welche aus einem anderen Signal - beispielsweise dem Sensieren der Bewegung eines anderen geeigneten beweglichen Teils der Handzange - auf einen Solchen Schnittvorgang sicher oder wahrscheinlich schließen lässt, kann auf einfache Weise eine Information bereit gestellt werden, welche einen Rückschluss auf die Beschaffenheit des Messers zum Ablängen der Lichtwellenleiter zulässt, ohne dass es hierzu notwendig wäre, ein konstruktiv aufwendiges mechanisches Zählwerk zum Zählen der Schnittanzahl bereit zu stellen.

Gemäß der Erfindung werden die beiden Funktionen der einfachen, sicheren Handhabe mit der Handhabungsvorrichtung zum Einlegen der Leiter und mit der Zählfunktion zusammengestellt.

Ein in das Werkzeug integriertes elektronisches Zählwerk ist dazu ausgelegt, eine Information auszugeben, welche direkt oder indirekt mit der Anzahl an Schnitten zusammenhängt, die mit dem Werkzeug getätigt worden sind.

Weitere vorteilhafte Ausgestaltungen der Erfindung sind den übrigen Unteransprüchen zu entnehmen.

Nachfolgend wird die Erfindung unter Bezug auf die Zeichnung anhand von Ausführungsbeispielen näher beschrieben. Es zeigen:
- Fig. 1a und b: verschiedene perspektivische Ansichten eines als Handzange ausgebildeten Werkzeugs zur Verarbeitung, insbesondere Konfektionierung, von Lichtwellenleitern mit einer Steckvorrichtung;
- Fig. 2a bis d: verschiedene perspektivische Ansichten von Abschnitten der Handzange aus Fig. 1;
- Fig. 3a: eine perspektivische Ansicht eines zum Abmanteln von Lichtwellenleitern ausgelegten Teilbereiches des Werkzeuges aus Fig. 1;
- Fig. 3b - i: die Konfektionierung von Lichtwellenleitern mit einer Steckvorrichtung;
- Fig. 4: eine perspektivische Ansicht eines weiteren als Handzange ausgebildeten Werkzeugs zur Verarbeitung, insbesondere Konfektionierung, von Lichtwellenleitern;
- Fig. 5: eine im Vergleich zu Fig. 4 aus einer anderen Position betrachtete perspektivische Ansicht eines Kopfbereichs der Handzange aus Fig. 4;
- Fig. 6a, b: eine weitere perspektivische Ansicht des Kopfbereiches der Handzange aus Fig. 4 und eine Schnittansicht eines Teilbereichs A des Werkzeugs aus Fig. 4;
- Fig. 7a, b: eine weitere perspektivische Ansicht des Kopfbereiches der Handzange aus Fig. 4 und eine Schnittansicht eines Teilbereichs B des Werkzeugs aus Fig. 4;
- Fig. 8a: eine perspektivische Ansicht einer Handhabungseinrichtung für Stecker mit daran angesetzten Steckern;
- Fig. 8b: die Handhabungseinrichtung aus Fig., 8 beim Einsetzen von Steckern in ein Werkzeug nach Fig. 4 bis 7; und

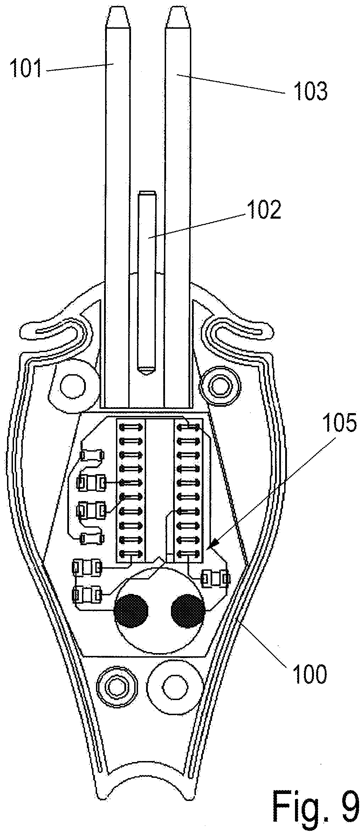

- Fig. 9: die Handhabungsvorrichtung aus. Fig. 8 mit abgenommener Gehäusehalbschale.

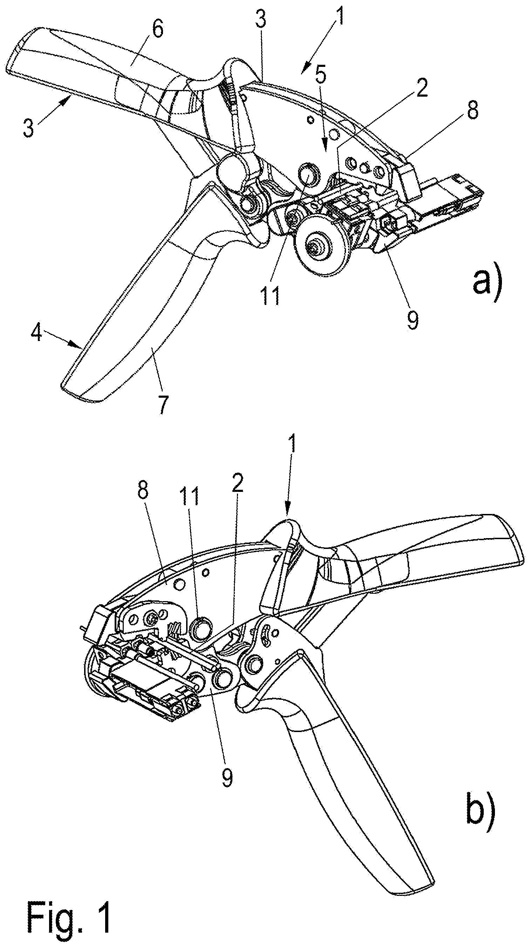

Fig. 1 zeigt ein Werkzeug 1 zur Verarbeitung, insbesondere Konfektionierung, von Lichtwellenleitern 2, insbesondere zur Verarbeitung, insbesondere Konfektionierung, von Polymer Optischen Fasern (POF), die z.B. zur Übertragung von Lichtwellen genutzt werden.

Das Werkzeug ist insbesondere dazu ausgelegt, zwei Lichtwellenleiter 2 mit einer Steckvorrichtung zu konfektionieren (insbesondere sogenannte POF Duplex Lichtwellenleiter und Steckvorrichtungen), wobei eine Besonderheit darin besteht, dass die Konfektionierung mit dem erfindungsgemäßen Werkzeug derart erfolgen kann, dass in der Regel kein nachträgliches Polieren der Lichtwellenleiter-Schnittfläche mehr erforderlich ist.

Das Werkzeug bietet dazu in der in Fig. 1 dargestellten bevorzugten Ausgestaltung Einrichtungen zur Realisierung der Funktionen "Abmanteln der POF-Lichtwellenleiter", "Crimpen der Stecker an die POF-Lichtwellenleiter", "Schneiden der POF-Lichtwellenleiter auf die richtige Länge" und "Vercrimpen einer Zugentlastung an dem Stecker". Es sei angemerkt, dass besonders vorteilhaft ist, sämtliche dieser Funktionen in einem Werkzeug zusammenzufassen. Es ist aber im Rahmen der Erfindung nicht zwingend, dass sämtliche dieser Funktionen in nur eine einzige Handzange integriert sind.

Das in Fig. 1 dargestellte Werkzeug 1 ist als Handzange ausgebildet. Es weist zwei relativ zueinander bewegliche Zangengriffe 3, 4 und einen Zangenkopf 5 auf. Die Zangengriffe 3, 4 sind mit Griffschalen 6, 7 versehen.

Der Zangenkopf 5 weist ferner zwei relativ zueinander bewegliche, hier verschwenkbare Verarbeitungsbacken 8, 9 auf, die in eine geöffnete und in eine geschlossene Stellung verschwenkbar sind und in ihrem Zusammenspiel ein Zangenmaul ausbilden.

Im vorliegenden Fall ist eine der Verarbeitungsbacken 8 starr mit einem der Zangengriffe 3 gekoppelt, vorzugsweise einstückig mit diesem ausgebildet

Die andere Verarbeitungsbacke 9 ist dagegen an einem Drehlager 11 schwenkbar an der ersten Verarbeitungsbacke 8 gelagert.

Der Zangengriff 3 ist über den Drehpunkt 11 beweglich mit der Klemmbacke 13 verbunden durch welche die Schließ- und Öffnungsbewegung realisiert wird. Angetrieben wird die Klemmbacke durch eine Kniehebelmechanik 12 gebildet aus Schubstrebe 14, Zangengriff 4 und Klemmbacke 13.

Werden die beiden Zangengriffe 3,4 von Hand zusammengedrückt, wirkt der zweite Zangengriff 4 am Drehlager 15 wodurch die Kniehebelmechanik 12 gebildet aus Schubstrebe 14, Zangengriff 4 und Klemmbacke 13 gestreckt wird, so dass die Klemmbacke 13 um das Drehlager 11 geschwenkt wird, was die Verarbeitungsbacken 8, 9 aufeinander zu bewegt, so dass sich das Zangenmaul schließt.

In bzw. an den Verarbeitungsbacken 8, 9 sind verschiedene Werkzeuge ausgebildet.

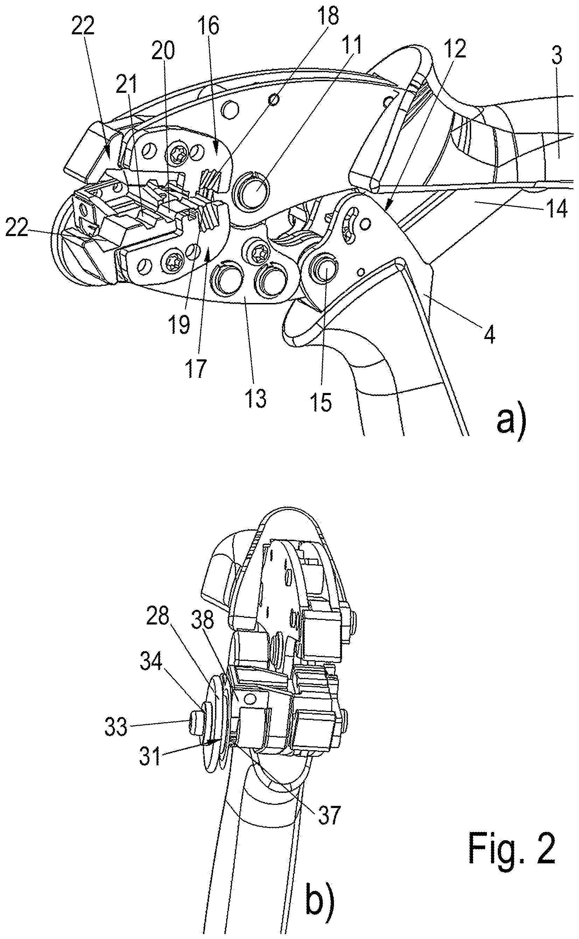

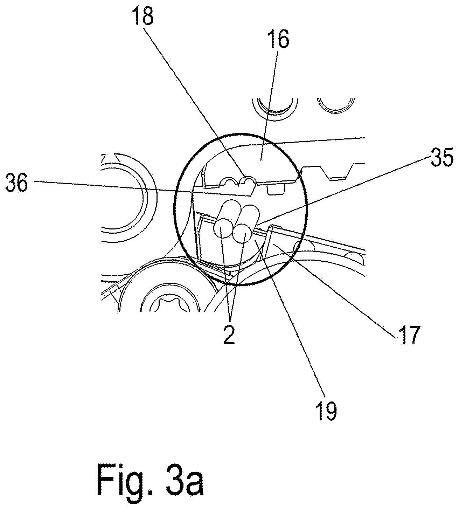

Diese Werkzeuge umfassen zunächst zwei Abmantelungsmesser 16, 17 (siehe Fig. 2a und 3a), welche seitlich an die Verarbeitungsbacken 8, 9 angesetzt sind und die korrespondierende Schneidbereiche 18, 19 aufweisen.

Diese Schneidbereiche 18, 19 sind derart bemessen, dass in Lichtwellenleiter 2, welche in die Schneidbereiche 18, 19 eingelegt sind, ein Schnitt eingebracht wird, der es erlaubt, einen umhüllenden Mantel vor der eigentlichen inneren Glasfaserleitung der Lichtwellenleiter 2 abzuziehen (siehe auch Fig. 3a).

Durch das Schließen des Werkzeugkopfes /-maules werden die Lichtwellenleiter 2 dabei in Führungen 35, 36 im Oberstempel und im Unterstempel bzw. in den Verarbeitungsbacken lagerichtig positioniert und fixiert.

Es ist nicht notwendig, die Lichtwellenleiter 2 auf eine genaue Länge abzumanteln, da das endgültige Abtrennen der Lichtwellenleiter 2 erst beim nachfolgenden Vercrimpvorgang erfolgt, bei dem sie automatisch auf die richtige Länge geschnitten werden.

Dieses endgültige Abtrennen der Lichtwellenleiter 2 erfolgt hier vorteilhaft während der gleichen Schließbewegung des Zangenkopfes, bei der auch das Vercrimpen der Lichtwellenleiterenden erfolgt.

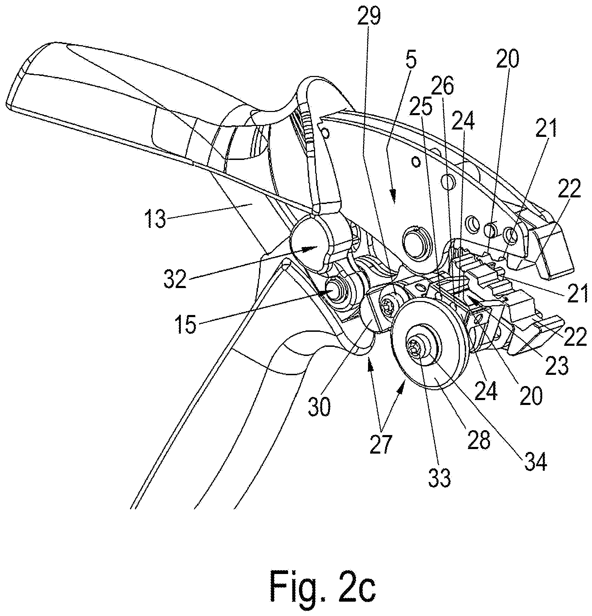

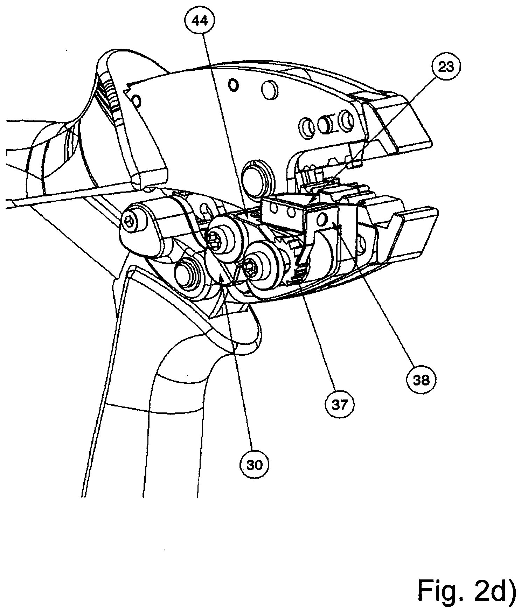

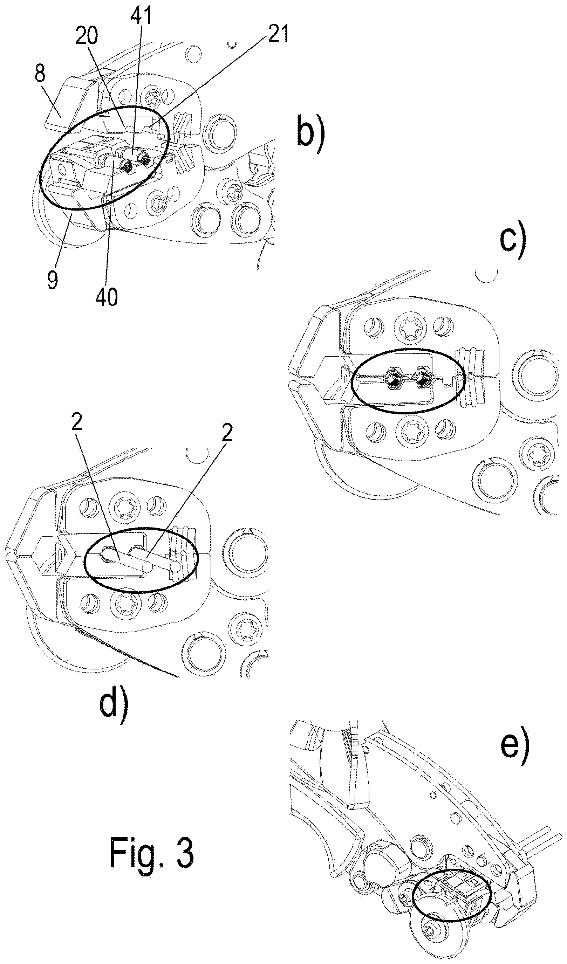

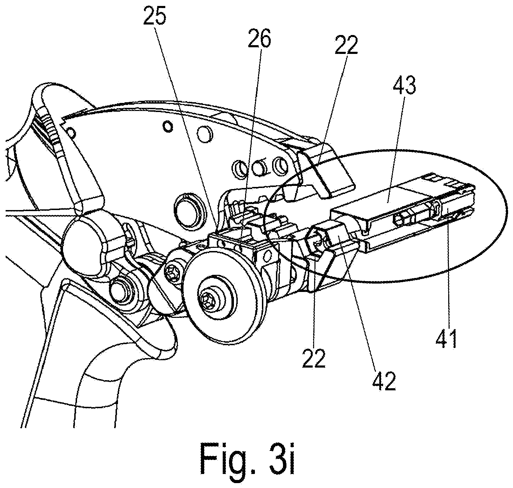

Die Werkzeuge an der Handzange umfassen ferner mehrere Crimpgesenke 20, 21 sowie 22 in den einander zugewandten Flächen der Verarbeitungsbacken 8, 9 (Fig. 2).
Mit den beiden Crimpgesenken 20 21 werden die beiden Stecker 40, 41 der Steckvorrichtung (siehe Fig. 3b bis 3e) an die Lichtwellenleiter 2 gecrimpt. Dagegen ist das dritte Crimpgesenk 22 dazu vorgesehen, eine Zugentlastungshülse 42 an dem Steckergehäuse 43 zu vercrimpen, in welches die beiden Stecker 40, 41 eingesetzt sind (siehe Fig. 3i).

An der von den Abmantelungsmessern 16, 17 abgewandten Seitenfläche der Verarbeitungsbacken 8, 9 ist an diesen ferner ein Aufnahmebereich 23 zur Aufnahme eines Steckergehäuses ausgebildet, der einen Anschlag 24 aufweist. Dies ergibt sich besonders gut aus Fig. 2c.

Der Anschlag 24 weist eine der Anzahl der zu verarbeitenden Stecker 40, 41 und Lichtwellenleiter 2 entsprechende Anzahl von Durchgangsöffnungen 25, 26 auf.

Der Anschlag 24 ist ferner derart konturiert, dass die beiden Stecker 40, 41 nur in der Lage einlegbar sind, wie sie für die Weiterverarbeitung notwendig ist, da nach dem Crimpen ein Drehen des Steckers 40, 41 um die Lichtwellenleiterachse nicht mehr möglich ist.

Zur Fixierung der Stecker 40, 41 im Werkzeug bzw. in den Crimpgesenken 20, 21 wird dieses leicht geschlossen, sodann werden die beiden Lichtwellenleiter 2 in die Stecker eingeführt, so dass sie vorn aus den Durchgangsöffnungen 25, 26 vorstehen. Durch ein Schließen des Werkzeugs werden sodann die beiden Stecker an die POF-Lichtwellenleiter 2 gecrimpt.

An der vom Anschlag 24 abgewandten Seite dieser Durchgangsöffnungen 25, 26 ist ferner eine Ablängmechanik 27 ausgebildet, die zum Ablängen der Lichtwellenleitern beim bzw. nach dem Vercrimpen mit Hilfe der beiden Crimpgesenke 20, 21 dient.

Die Ablängmechanik 27 umfasst eine Andrückscheibe 128, die seitlich beabstandet vom Anschlag 24 montiert ist und eine abgeschrägte Außenumfangsfläche - die Schräge 31 - aufweist (Fig. 2b). Die Druckscheibe 28 kann mit einer Schraube 33 und einer Unterlegscheibe 34 an die untere Arbeitsbacke 9 angeschraubt sein. Die Druckscheibe 28 kann selbst drehbar gelagert sein.

Die Ablängmechanik 27 weist ferner ein Rundmesser 29 auf, welches an einem Hebelarm 30 selbst drehbar gelagert ist und welches durch seine Anordnung am Ende des verschwenkbaren Hebelarmes 30 derart längs eines Kreisbogenabschnittes derart beweglich ist, dass mit ihm aus den Durchgangsöffnungen 25, 26 bei oder nach dem Vercrimpen noch vorstehende Enden der Lichtwellenleiter 2 durchtrennbar sind.

Das Rundmesser 29 ist durch seine Anordnung an dem Hebelarm 30 in einen Spaltbereich (siehe Fig. 2b) zwischen der Druckscheibe 28 und dem Anschlag 24 schwenkbar.

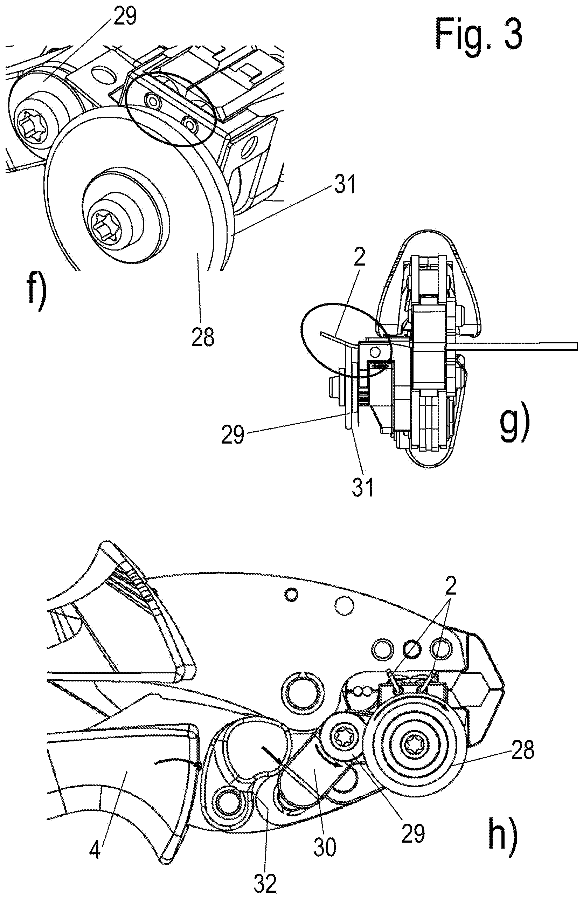

Der Hebelarm 30 wird selbst dadurch verschwenkt, dass auf ihn ein Ende eines Betätigungshebels 32 einwirkt, der fest mit dem Zangengriff verbunden ist und wiederum beim oder nach dem Vercrimpen beim Zusammendrücken der Handgriffe 3, 4 gegen Ende des Crimpvorganges auf den Hebel 30 einwirkt (Fig. 3f, g, h).

Der Handgriff 4 verschwenkt den Betätigungshebel 32 und dieser den Hebel 30 mit dem Rundmesser 29, das derart gegen die durch die Durchgangsöffnungen 25, 26 vorstehenden Enden der Lichtwellenleiter 2 gedrückt wird und diese abtrennt.

Beim Einlegen der Stecker in den Anschlag 24 stößt ein federnd gelagertes Ende der Steckers 40, 41 gegen das Rundmesser 29, so dass die Toleranzen der einzelnen Bauteile der Stecker 40, 41 ausgeglichen werden und die Stecker 40, 41 quasi spielfrei an dem Rundmesser 29 liegen.

Beim Einführen der beiden POF-Lichtwellenleiter 2 in die Stecker 40, 41 stoßen die abgemantelten Lichtwellenleiter 2 an eine umlaufende Schräge 31 der Druckscheibe 28 (Fig. 2b) und gleiten derart an dieser Schräge 31 entlang, dass die POF-Lichtwellenleiter leicht relativ zur Ausrichtung der Leiterlängsachsen in den Steckern 40, 41 in dem Aufnahmebereich 23 abgewinkelt werden (Fig. 3d).

Vorteilhaft ist, dass vor den Durchgangsöffnungen quasi eine Art Hindernis durch die Druckscheibe 28 realisiert wird, welches in Verlängerung der Leiterlängsachse in den Durchgangsöffnungen 25, 26 liegt, so dass die Lichtwellenleiter schräg um dieses Hindernis gelegt werden müssen, was die leichte Vorspannung hervorruft, welche das Schnittbild so deutlich verbessert.

Durch das Abwinkeln der Lichtwellenleiter 2 werden diese unter Spannung gesetzt, woraus beim anschließenden Abtrennen der Lichtwellenleiter 2 eine hervorragende Schnittfläche resultiert, die nicht nachpoliert werden muß. Die Dämpfung in der Schnittstelle ist bereits allein durch den Schnitt weitgehend reduziert.

Das Abtrennen der POF Lichtwellenleiter 2 erfolgt derart für den Benutzer auf einfach handhabbare Weise mit der gleichen Schließbewegung, die zum Vercrimpen der Stecker 40, 41 dient. Der Schnitt verläuft letztendlich wiederum rechtwinklig zum Lichtwellenleiter, damit der Lichtwellenleiter bündig mit dem Stecker abschließt.

Kurz bevor das Werkzeug komplett geschlossen ist, drückt der Betätigungshebel 32 gegen den Hebel 30, wodurch das Rundmesser 29 die überstehenden Lichtwellenleiter 2 bündig am Stecker 40 abtrennt (Fig. 3h).

Während des Abtrennvorgangs wird das Rundmesser 29 angetrieben, wozu eine Antriebsmechanik für das Rundmesser 29 vorgesehen ist.

Diese umfasst hier zumindest eine antreibende Zahnscheibe 37 und eine Sperrklinke 38 (Fig. 2b).

Durch die Zahnscheibe 37 und die Sperrklinke 38 wird das Rundmesser 29 in Rotation versetzt, bis der Schnitt an den Lichtwellenleitern 2 vollzogen ist.

Zur Optimierung der Schnittfläche an den Lichtwellenleitern wird das Rundmesser 29 in eine Rotationsbewegung gebracht (siehe hierzu auch Fig. 2c).

Dies geschieht - siehe Fig. 2d - durch die Schwenkbewegung des Hebelarms 30, der Zahnscheibe und der Sperrklinken 38 und einer zweiten Sperrklinke 44. Die erste Sperrklinke 38 ist fest mit dem Aufnahmebereich 23 verbunden, die Zahnscheibe 37 ist fest mit dem Messer 29 verbunden, die gemeinsam auf einer Achse rotatorisch gelagert sind.

Wird nun der Hebelarm 30 betätigt, drückt die erste Sperrklinke 38 auf die Zahnscheine Pos. 37 und bringt somit das Messer 29 in eine Rotationsbewegung. Die Sperrklinke 44 hindert die Zahnscheibe 37 und damit auch das Rundmesser 29 an einer Rückdrehung, was die vorteilhafte Folge hat, dass das Messer bei jedem Schnitt an einer anderen Stelle benutzt wird.

Das Crimpgesenk 22 für die Zugentlastung ist vorne im Zangenmaul ausgebildet bzw. angeordnet, damit die vormontierte Einheit mit den Komponenten "Stecker 40, 41, Gehäuse 43, Kabel Zugentlastungshülse 42" einfach in das Crimpgesenk 22 eingelegt und aus diesem entnommen werden kann.

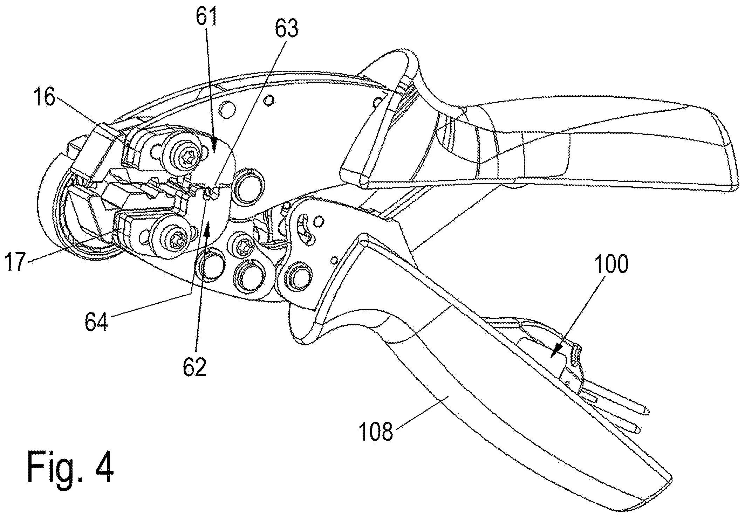

Nach dem Ausführungsbeispiel der Fig. 4 sind zur besseren Führung der Lichtwellenleiter in der Abisolierstation und für ein gleichmäßigeres Einschneiden der Isolierung der Lichtwellenleiter neben den Abmantelungsmessern 16, 17 Führungsplatten 61, 62 angeordnet. Diese Führungsplatten 61, 62 werden beim Abmanteln aneinander gepresst - bis auf Aussparungen 63, 64 welche Durchgangsöffnungen für die Lichtwellenleiter 2 bilden. Die Führungsplatten 61, 62 verbessern die Schnittqualität bei dem Abisolieren, indem sie eine Beschädigung der eigentlichen lichtleitenden Fasern des Lichtwellenleiters verhindern. Darüber hinaus werden die Handkräfte zum Herausziehen des Fasern verringert und es wird eine Beschädigung der Fasern durch die Abmantelungsmesser 16, 17 verhindert.

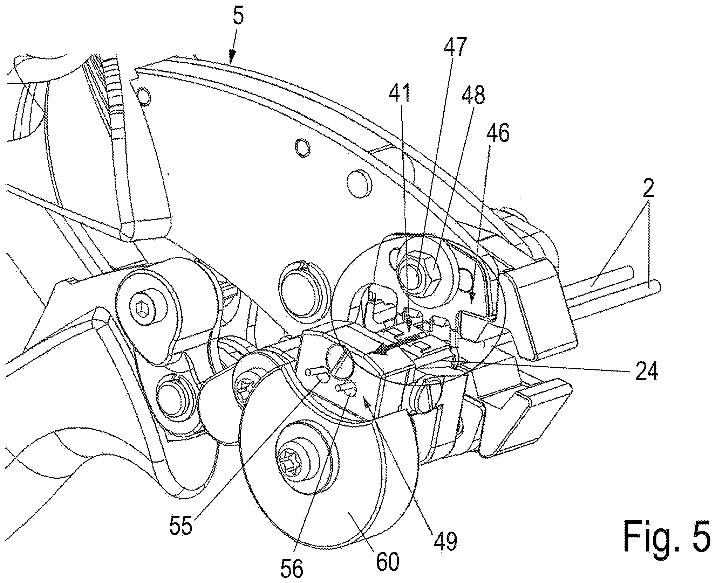

Fig. 5 zeigt ein weiteres vorteilhaftes Detail eines Ausführungsbeispiels einer erfindungsgemäßen Handzange. Dabei ist keine Druckscheibe 28 mehr vorgesehen, um die Schrägstellung des Leiters beim Schnitt zu sichern. Diese Schrägstellung wird vielmehr durch das Messer 29 und eine Führung 49 erreicht.

Diese Handzange ist mit einer Feder 46 versehen, welche am Zangenkopf abgestützt ist.

Hier ist die Feder 46 eine Blattfeder, welche an dem Zangenkopf 5 mit einer Schraube 47 und einer Mutter 48 und ggf. einer Scheibe festgelegt ist. Sie ist auf der Seite des Zangenkopfes 5 angeordnet, auf welcher auch die Ablängmechanik 27 zum Ablängen der Lichtwellenleiter 2 angeordnet ist.

Die Feder 46 ist derart ausgelegt und angeordnet, dass sie beim Schließen der Zange die Stecker 40, 41 in Richtung eines Widerlagers drückt. Hier wird dieses Widerlager durch den Anschlag 24 gebildet.

Derart wird sichergestellt, dass die Lichtwellenleiter an der richtigen axialen Stelle abgelängt werden, da die Stecker 41 definiert an dem Widerlager zur Anlage kommen, gegen welches sie die Feder 46 drückt.

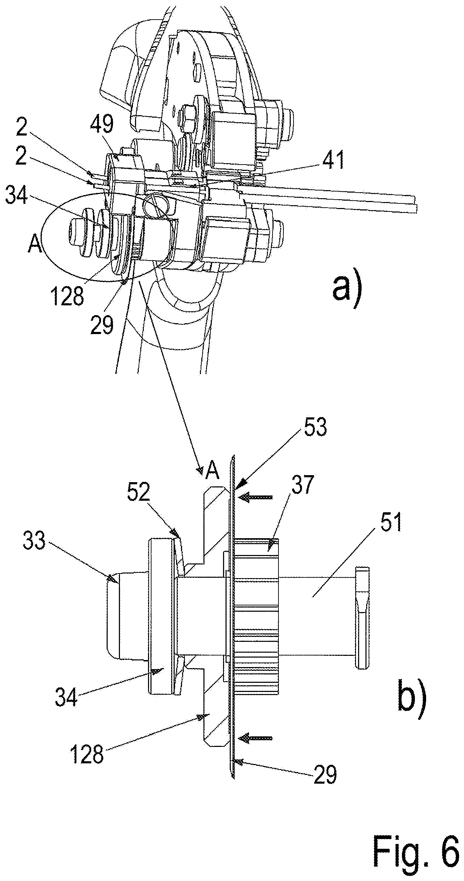

Die Feder 46 hat damit die Wirkung einer automatischen Positionierhilfe für die Stecker 41 (siehe auch Fig. 6a).

Fig. 5 zeigt auch eine Schutzabdeckung 60 insbesondere für das Rundmesser 29. Nach Fig. 6 weist die modifizierte Ablängmechanik 27 der Fig. 6a, b wiederum ein Rundmesser 29 auf, welches drehbar gelagert ist und antreibbar ist und welches durch seine Anordnung am Ende des verschwenkbaren Hebelarmes 30 derart längs eines Kreisbogenabschnittes derart beweglich ist, dass mit ihm bei oder nach dem Vercrimpen noch vorstehende Enden der Lichtwellenleiter 2 durchtrennbar sind. Der Hebelarm 30 wird wie zu Fig. 3 beschrieben verschwenkt. Gut zu erkennen sind die das Rundmesser drehende bzw. antreibende Zahnscheibe 37 und eine Sperrklinke 38.

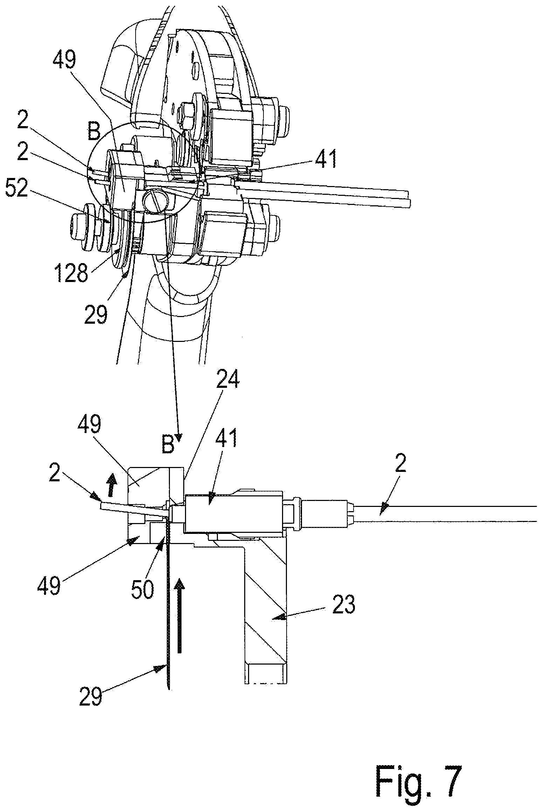

Das Rundmesser 29 ist durch seine Anordnung an dem Hebelarm 30 in einen Spaltbereich (siehe Fig. 7) bzw. eine Aussparung 50 zwischen der Aufnahme 24 und der Führung 49 schwenkbar.

Das Rundmesser 29 liegt direkt an der Zahnscheibe 37 und ist mit dieser drehfest gekoppelt. Auf seiner der Zahnscheibe 37 gegenüber liegenden Seite liegt das Rundmesser 29 an einer Andrückscheibe 128 an. Diese Andrückscheibe 128 weist vorzugsweise einen Durchmesser auf, der nur unwesentlich kleiner ist (vorzugsweise maximal 20% kleiner) als der Durchmesser des Schneidmessers 29.

Zwischen der Schraube 33 und der Andrückscheibe 128 sind vorzugsweise eine Unterlegscheibe 34 und eine Feder, hier eine Federscheibe 52 angeordnet. Die Feder dient dazu, die Andrückscheibe 128 gegen das Rundmesser 29 zu drücken. Die Andrückscheibe 128 weist vorzugsweise einen axialen Bund oder Ansatz 53 auf, welcher als Anlagebereich zum Schneidmesser 29 dient. Derart wird das Schneidmesser als Rundmesser 29 in diesem Bereich exakt geführt (Fig. 6b) und kann beim Schneiden der Lichtwellenleiter 2 nicht ausweichen.

Den eigentlichen Schneidevorgang zeigen Fig. 7a und b.

Fig. 7 veranschaulicht, wie die Stecker 41 mit den Lichtwellenleitern in der Führung 49 einliegen.
Die Führung 49 ist an den Zangenkopf - vorzugsweise an die untere Verarbeitungsbacke 9 - angesetzt und an dieser befestigt oder an diese angeformt. Das Schneidmesser 29 ist relativ zur feststehenden Führung 49 beweglich.

Beispielsweise zwischen dem Anschlag 24 des Aufnahmebereichs 23 und der Führung 49 ist vorteilhaft die Ausnehmung 50 ausgebildet, in welche das Schneidmesser 29 während des Schneidvorgangs eintauchen kann.

Die Führung 49 weist ferner eine der Anzahl zu schneidender Lichtwellenleiter 2 entsprechende Anzahl von Durchgangslöchern 55, 56 (oder Sacklöchern auf).

Die Durchgangslöcher 55, 56 sind vorzugsweise derart gestaltet, dass sie sich in Richtung der freien Enden der Lichtwellenleiter 2 etwas aufweiten. Derart wird die eigentliche Faser der Lichtwellenleiter 2 beim Schneidvorgang 2 vom Rundmesser 29 etwas schräg nach oben gedrückt. Diese leichte Schräglage verhindert ein unkontrolliertes Abknicken des Lichtwellenleiters 2. Damit wird wieder ein leichtes Abwinkeln unter Spannung ermöglicht. Die Schräglage ist damit aber dennoch derart bemessen, dass der eigentliche Schnitt doch genau senkrecht zu Leiterlängsachse erfolgt.

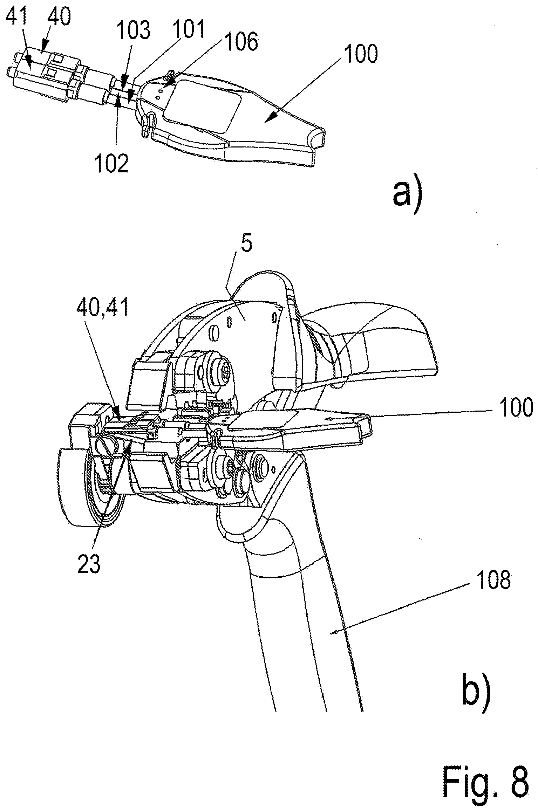

Fig. 8 zeigt eine Handhabungsvorrichtung für Stecker. Diese Handhabungsvorrichtung weist ein Gehäuse 100 auf, aus welchem einer oder vorzugsweise mehrere Stifte 101, 102, 103 vorstehen. Das Gehäuse kann aus zwei relativ flachen, gut zu haltenden Gehäusehalbschalen zusammen gesetzt sein.

Die Stifte 101, 102, 103 sind parallel zueinander ausgerichtet. Zwei dieser Stifte - hier die äußeren Stifte 101, 103 - sind länger als der dritte mittlere Stift 102.

Die beiden äußeren Stifte sind derart bemessen, dass auf sie jeweils einer der Stecker 40, 41 aufsteckbar ist (Fig. 8a).

Diese Anordnung ermöglicht ein besonders einfaches Positionieren dieser Stecker in der Aufnahme 23.

Die Handhabungsvorrichtung ist derart ausgestaltbar, dass sie in einem Hohlraum bzw. einer Ausnehmung der Zangengriffe 107 (Fig. 4) aufbewahrt werden kann, wenn das Werkzeug nicht gebraucht wird. Sie kann dann beispielsweise in einem Aufnahmebereich des einen Zangengriffes verrastet werden.

Erfindungsgemäß ist die Handhabungsvorrichtung auch als Schnittsensor ausgelegt.

Hier ist es vorteilhaft, in das Gehäuse 100 eine Elektronikschaltung 105 zu integrieren und am Gehäuse 100 eine oder mehrere Anzeigevorrichtungen wie eine LED 106 anzuordnen.

Vorzugsweise ist die Elektronikschaltung 105 derart ausgelegt, dass bei einem Schließen der Zange ein Strompfad geschlossen wird, so beispielsweise ein elektrisch leitender Strompfad zwischen dem mittleren Stift 102 und einem der Stecker 40, 41 auf einem der äußeren Stifte 101, 103 über ein Teil des Verarbeitungswerkzeuges, welches elektrisch leitend ist.

Dieses Schließen des Strompfades wird von der Elektronikschaltung als Signal registriert. Die registrierten Signale werden aufsummiert und das Summensignal wird gespeichert. Das Summensignal wird ferner mit einem oder mehreren Grenzwerten verglichen. In Abhängigkeit von diesem Vergleich wird die Anzeigeeinrichtung angesteuert.

Da die Zange jedenfalls in der Regel nur geschlossen wird, wenn mit der Einlegehilfe einer oder mehrere Stecker 40, 41 in die Aufnahme gelegt wurden und für einen Crimpvorgang und Ablängvorgang der Zangenkopf geschlossen wurde, ergibt sich durch das aufsummierte Signal eine Information, die der Anzahl an getätigten Schnitten genau oder jedenfalls weitgehend genau entspricht, jedenfalls näherungsweise dann, wenn man davon ausgeht, dass bei jedem Einlegen eines Steckers in der Regel auch ein Schnitt erfolgt.

Überschreitet das Signal einen gespeicherten Grenzwert, kann eine entsprechende Information ausgegeben werden. So kann eine LED 106 aufleuchten oder aber ihre Farbe wechseln. Die LED kann auch mehrfach ihre Farbe wechseln und beispielsweise unterhalb eines ersten Grenzwertes grün leuchtet, beim Erreichen eines ersten Grenzwertes gelb, was anzeigt, dass das Messer 29 bald gewechselt werden muss und beim Überscheiten eines zweiten Grenzwertes rot, was anzeigt, dass das Messer 29 zu wechseln ist.

Derart wird auf einfache Weise und unter Verzicht auf eine aufwendige Zählwerkmechanik eine Kontrolle der Messerqualität ermöglicht.

Durch ein RESET z.B. an einem Schalter kann der Zähler zurück auf null gesetzt werden (nicht dargestellt).

Zur Beschreibung bevorzugter Ausführungsbeispiele sei angemerkt, dass vorangehend einige bevorzugte Ausgestaltungen auch im Detail beschrieben werden, dass die Erfindung aber nicht auf diese Ausgestaltungen beschränkt ist sondern im Rahmen der Ansprüche beliebig variiert ausgestaltet werden kann. Insbesondere sind Begriffe wie "oben", "unten", "vorne" oder "hinten" nicht einschränkend zu verstehen sondern beziehen sich lediglich auf die jeweils dargestellte Anordnung. Zudem sind, wenn einzelne Bestandteile erläutert werden, diese - wenn nicht anders erwähnt - grundsätzlich auch in mehrfacher Ausgestaltung denkbar. Unter den Schutzbereich fallen zudem auch funktionale Umkehrungen der dargestellten Anordnungen und Verfahren sowie äquivalente Ausgestaltungen.

**Bezugszeichen**

| | |
|---|---|
| Werkzeug | 1 |
| Lichtwellenleiter | 2 |
| Zangengriffe | 3, 4 |
| Zangenkopf | 5 |
| Griffschalen | 6, 7 |
| Verarbeitungsbacken | 8, 9 |
| Drehlager | 11 |
| Kniehebelmechanik | 12 |
| Klemmbacke | 13 |
| Schubstrebe | 14 |
| Drehlager | 15 |
| Abmantelungsmesser | 16, 17 |
| Schneidbereiche | 18, 19 |
| Crimpgesenke | 20, 21 sowie 22 |
| Aufnahmebereich | 23 |
| Anschlag | 24 |
| Durchgangsöffnungen | 25, 26 |
| Ablängmechanik | 27 |
| Druckscheibe | 28 |
| Rundmesser | 29 |
| Hebelarm | 30 |
| Schräge | 31 |
| Betätigungshebel | 32 |
| Schraube | 33 |
| Unterlegscheibe | 34 |
| Führungen | 35, 36 |
| Zahnscheibe | 37 |
| Sperrklinke | 38 |
| Stecker | 40, 41 |
| Zugentlastungshülse | 42 |
| Steckergehäuse | 43 |
| Zweite Sperrklinke | 44 |
| Feder | 46 |
| Schraube | 47 |
| Mutter | 48 |
| Führung | 49 |
| Aussparung | 50 |
| Welle | 51 |
| Federscheibe | 52 |
| Ansatz | 53 |
| Durchgangslöcher | 55, 56 |
| Anlagebereich | 57 |
| Ausnehmung | 58 |
| Abdeckung | 60 |
| Führungsplatten | 61, 62 |
| Aussparungen | 63, 64 |
| Gehäuse | 100 |
| Stifte | 101, 102, 103 |
| Elektronikschaltung | 105 |
| LED | 106 |
| Zangengriff | 107 |

## Patentansprüche

1. Werkzeug (1), insbesondere zangenartiges Werkzeug, zur Verarbeitung, insbesondere Konfektionierung, von Lichtwellenleitern (2), wobei das Werkzeug zumindest aufweist:
a. wenigstens eines oder mehrere Crimpgesenke (20, 21, 22) zum Vercrimpen des wenigstens einen Lichtwellenleiters oder mehrerer Lichtwellenleiter (2) mit Steckern (40, 41), und
b. eine Ablängmechanik (27) zum Ablängen von Enden des oder der Lichtwellenleiter (2)
**dadurch gekennzeichnet, dass**
c. es eine Handhabungsvorrichtung aufweist,
i. wobei die Handhabungsvorrichtung derart ausgelegt ist, dass mit ihr der oder die Stecker (40, 41) in wenigstens eine Aufnahme (23) des Werkzeugs einlegbar ist/sind, und
ii. wobei die Handhabungsvorrichtung dazu ausgelegt ist, eine Information auszugeben, welche direkt oder indirekt mit der Anzahl an Schnitten zusammenhängt, die mit dem Werkzeug insbesondere seit einem Messerwechsel getätigt worden ist.

2. Werkzeug mit Handhabungsvorrichtung nach Anspruch 1, **dadurch gekennzeichnet, dass** die Handhabungsvorrichtung ein Gehäuse (100) aufweist, aus welchem einer oder vorzugsweise mehrere Stifte (101, 102, 103) vorstehen.

3. Werkzeug mit Handhabungsvorrichtung nach Anspruch 2, **dadurch gekennzeichnet, dass** die Stifte (101, 102, 103) parallel zueinander ausgerichtet sind.

4. Werkzeug mit Handhabungsvorrichtung nach Anspruch 2 oder 3, **dadurch gekennzeichnet, dass** zwei oder mehr der Stifte - vorzugsweise die äußeren Stifte (101, 103) länger sind als ein dritter mittlerer Stift (102).

5. Werkzeug mit Handhabungsvorrichtung nach einem der Ansprüche 2 bis 4, **dadurch gekennzeichnet, dass** wenigstens einer oder mehrere der Stifte derart bemessen sind, dass auf sie jeweils einer der Stecker (40, 41) aufsteckbar ist, um den oder die Stecker in der Aufnahme (23) zu positionieren.

6. Werkzeug mit Handhabungsvorrichtung nach einem oder mehreren der vorstehenden Ansprüche, **dadurch gekennzeichnet, dass** die Handhabungsvorrichtung (41) derart ausgestaltet ist, dass sie in einem Zangengriff (108) aufbewahrbar ist.

7. Werkzeug mit Handhabungsvorrichtung nach einem oder mehreren der vorstehenden Ansprüche, **dadurch gekennzeichnet, dass** die Handhabungsvorrichtung eine Elektronikschaltung (105) und eine oder mehrere Ausgabevorrichtungen für Informationen, insbesondere eine oder mehrere Anzeigevorrichtungen wie eine LED aufweist.

8. Werkzeug mit Handhabungsvorrichtung nach Anspruch 7, **dadurch gekennzeichnet, dass** die Elektronikschaltung derart ausgelegt ist, dass bei einem Schließen der Zange ein Signal erzeugt und registriert wird.

9. Werkzeug mit Handhabungsvorrichtung nach einem der Ansprüche 7 und 8, **dadurch gekennzeichnet, dass** die Elektronikschaltung dazu ausgelegt ist, die erzeugten Signale aufzusummieren, mit einem oder mehreren Grenzwerten zu vergleichen und in Abhängigkeit vom Ergebnis dieses Vergleiches ein Signal an der Ausgabeeinrichtung auszugeben.

## Claims

1. Tool (1), in particular a pincers-type tool, for processing, especially assembling, lightwave conductors (2), wherein the tool has at least:
a. at least one or several crimping dies (20, 21, 22) for the crimping of the at least one lightwave conductor or several lightwave conductors (2) with plugs (40, 41), and
b. a length-cutting mechanism (27) for the purpose of crosscutting the ends of the lightwave conductor or conductors (2),
**characterized in that**
c. it comprises a manipulating device,
i) wherein the manipulating device is designed such that the plug or plugs (40, 41) can be inserted with said device into at least one receptacle (23) of the tool, and
ii) wherein the manipulating device is designed such that an information item is output which is directly or indirectly related to the number of cuts that have been carried out with the tool, in particular since a knife change.

2. Tool with manipulating device according to claim 1, **characterized in that** the manipulating device comprises a housing (100) out of which protrude one or preferably several pins (101, 102, 103).

3. Tool with manipulating device according to claim 2, **characterized in that** the pins (101, 102, 103) are aligned parallel to each other.

4. Tool with manipulating device according to claim 2 or 3, **characterized in that** two or more of the pins, preferably the outer pins (101, 103), are longer than a third middle pin (102).

5. Tool with manipulating device according to one of claims 2 to 4, **characterized in that** at least one or several of the pins are dimensioned such that in each case one of the plugs (40, 41) can be inserted thereon in order to position the plug or plugs in the receptacle (23).

6. Tool with manipulating device according to one or several of the above claims, **characterized in that** the manipulating device (41) is designed such that it can be stored in a pincer grip (108).

7. Tool with manipulating device according to one or several of the above claims, **characterized in that** the manipulating device has an electronic circuit (105) and one or several output devices for information, in particular, one or several display devices such as an LED.

8. Tool with manipulating device according to claim 7, **characterized in that** the electronic circuit is designed such that a signal is generated and recorded upon a closing of the pincers.

9. Tool with manipulating device according to one of claims 7 and 8, **characterized in that** the electronic circuit is designed to add up the generated signals, to compare them to one or several boundary values, and as a function of the result of this comparison, to output a signal at the output device.

## Revendications

1. Outil (1), en particulier outil en forme de pince, pour le travail sur des guides d'ondes lumineuses (2), en particulier la préparation de câbles, l'outil présentant au moins :
a. au moins une ou plusieurs matrices de sertissage (20, 21, 22) pour sertir l'au moins un guide d'ondes lumineuses ou les plusieurs guides d'ondes lumineuses (2) avec des connecteurs (40, 41) et
b. un mécanisme de recoupe (27) pour recouper les extrémités du ou des guides d'ondes lumineuses (2),
**caractérisé en ce que**
c. il comporte un dispositif de manipulation,
i. lequel dispositif de manipulation est conçu de façon à permettre l'insertion du ou des connecteurs (40, 41) dans au moins un logement (23) de l'outil et
ii. lequel dispositif de manipulation est conçu de façon à émettre une information en relation directe ou indirecte avec le nombre de coupes qui ont été effectuées avec l'outil, en particulier depuis un changement de lame.

2. Outil avec dispositif de manipulation selon la revendication 1, **caractérisé en ce que** le dispositif de manipulation présente un boîtier (100) duquel dépassent une ou, de préférence, plusieurs goupilles (101, 102, 103).

3. Outil avec dispositif de manipulation selon la revendication 2, **caractérisé en ce que** les goupilles (101, 102, 103) sont orientées parallèlement les unes aux autres.

4. Outil avec dispositif de manipulation selon la revendication 2 ou 3, **caractérisé en ce que** deux ou plusieurs des goupilles, de préférence les goupilles extérieures (101, 103), sont plus longues qu'une troisième goupille centrale (102).

5. Outil avec dispositif de manipulation selon l'une des revendications 2 à 4, **caractérisé en ce qu'**au moins une ou plusieurs des goupilles sont dimensionnées de façon à pouvoir être emboîtées chacune sur un des connecteurs (40, 41) afin de positionner le ou les connecteurs dans le logement (23).

6. Outil avec dispositif de manipulation selon une ou plusieurs des revendications précédentes, **caractérisé en ce que** le dispositif de manipulation (41) est conformé de manière à pouvoir être rangé dans une poignée de pince (108).

7. Outil avec dispositif de manipulation selon une ou plusieurs des revendications précédentes, **caractérisé en ce que** le dispositif de manipulation comprend un circuit électronique (105) et un ou plusieurs dispositifs de sortie d'informations, en particulier un ou plusieurs dispositifs indicateurs tels qu'une DEL.

8. Outil avec dispositif de manipulation selon la revendication 7, **caractérisé en ce que** le circuit électronique est conformé de telle façon qu'un signal soit produit et enregistré lors d'une fermeture de la pince.

9. Outil avec dispositif de manipulation selon l'une des revendications 7 et 8, **caractérisé en ce que** le circuit électronique est conformé de façon à additionner les signaux produits, à les comparer à une ou plusieurs valeurs limites et à émettre un signal vers le dispositif de sortie en fonction du résultat de cette comparaison.
